Europäisches Patentamt

(19) European Patent Office

Office européen des brevets

(11) Publication number: **0 067 563**
**B1**

(12) **EUROPEAN PATENT SPECIFICATION**

(45) Date of publication of patent specification: **20.08.86**

(21) Application number: **82302651.3**

(22) Date of filing: **24.05.82**

(51) Int. Cl.⁴: **H 02 H 9/08**

(54) Secondary arc extinction device.

(30) Priority: **29.05.81 JP 82128/81**

(43) Date of publication of application:
**22.12.82 Bulletin 82/51**

(45) Publication of the grant of the patent:
**20.08.86 Bulletin 86/34**

(84) Designated Contracting States:
**CH DE GB LI SE**

(56) References cited:
**US-A-2 050 082**
**US-A-2 824 978**

**"Soviet Inventions Illustrated" Week C 30, 3
September 1980
"Soviet Inventions Illustrated" Week C 15, 21
May 1980**

(73) Proprietor: **Kabushiki Kaisha Toshiba
72, Horikawa-cho Saiwai-ku
Kawasaki-shi Kanagawa-ken 210 (JP)**

(72) Inventor: **Takanashi, Tomio c/o Patent Division
Toshiba Corporation 72, Horikawa-cho Saiwai-
ku
Kawasaki-shi Kanagawa-ken (JP)**

(74) Representative: **Kirk, Geoffrey Thomas et al
BATCHELLOR, KIRK & EYLES 2 Pear Tree Court
Farringdon Road
London EC1R 0DS (GB)**

Courier Press, Leamington Spa, England.

## Description

This invention relates to a multiphase transmission line having means for extinguishing a secondary arc between one phase of the line and earth.

In a multiphase transmission line, a flashover can occur between one of the transmission lines and earth, such a flashover being referred to as a secondary arc. Such a flashover is particularly likely to occur in conditions when lightning is liable to occur. Although each phase of the transmission line has a circuit breaker at each end and these breakers are opened to isolate the line in an attempt to extinguish the arc, the arc is continued to be fed from other phases of the line due to the electrostatic coupling which exists between the conductors of the transmission line.

The problem of secondary arc extinction exists with power transmission systems at the voltage rating used at present but it will become an even greater problem in the future when UHV power transmission systems are employed.

When the circuit breakers at the ends of one or more phases of a transmission line are opened, it can affect the stability of the whole system and, clearly, it is desirable that the circuit breakers should be reclosed and current flow through the line established as soon as possible. On the other hand, it is necessary to ensure that secondary arc is fully extinguished before reclosing the breakers.

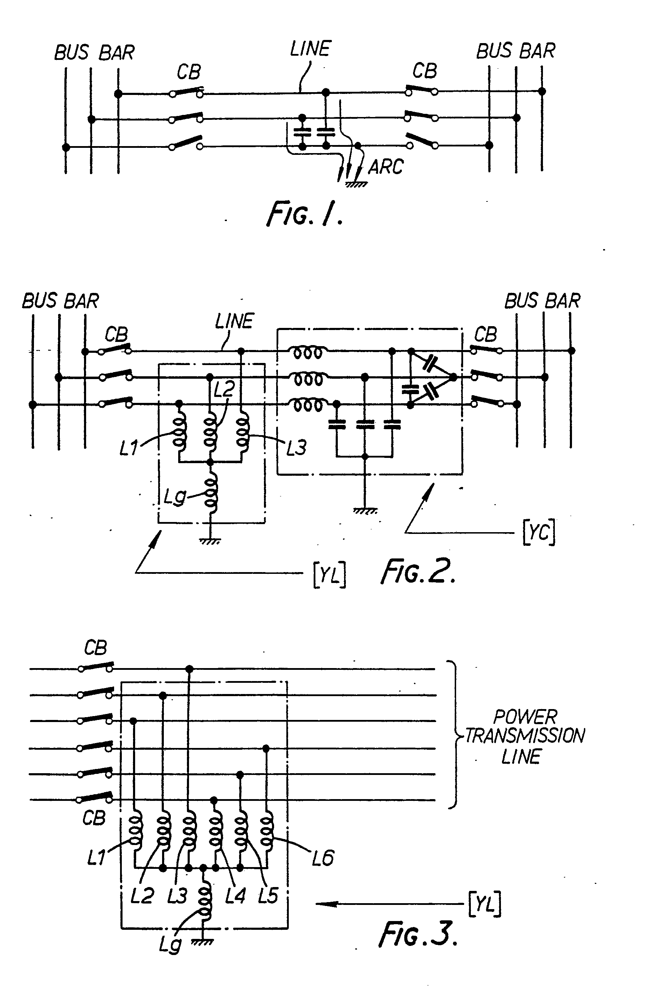

Figure 1 shows a conventional electric power transmission line with a flashover to earth from one of the phases.

In Figure 1, two three phase bus bars are interconnected by a three phase transmission line. At each end of the line there is a circuit breaker CB in each phase. A secondary arc ARC is shown from one of the phases to earth and the interphase capacity is also indicated and it is this capacity which enables power to be supplied to the arc even when the breakers at the ends of the phase line or conductor are open. Thus, a fault between a phase and earth setting up a secondary arc is not removed simply by opening the circuit breakers at the ends of that phase. It has been suggested to provide a reactor which serves to cancel the electrostatic capacity between the lines of a high voltage transmission system in order to extinguish the arc. Such an arrangement is shown in Figure 2, where $Y_c$ indicates the interphase capacitance and the capacitance between the phases to earth and $Y_L$ indicates a reactor connected to each phase of the line and with its star point connected through a further reactance to earth. Figure 3 shows a similar reactor $Y_L$ which is provided for a three phase transmission line in which there are two conductors per phase. In this case, each phase conductor has a circuit breaker CB at each end and the reactors are connected between each phase line and the star point of the six reactors is connected through a further reactor to ground.

Referring to Figure 2 again, the matrix of the transmission line admittance $Y_c$ is expressed by the equation (1), while the matrix of the extinguishing reactor admittance $Y_L$ is expressed by the equation (2).

$$Y_c = \begin{bmatrix} Y_{c_{11}} & -Y_{c_{21}} & -Y_{c_{31}} \\ -Y_{c_{12}} & Y_{c_{22}} & -Y_{c_{32}} \\ -Y_{c_{13}} & -Y_{c_{23}} & Y_{c_{33}} \end{bmatrix} \quad \ldots(1)$$

$$Y_L = -\begin{bmatrix} Y_{L_{11}} & -Y_{L_{21}} & -Y_{L_{31}} \\ -Y_{L_{12}} & Y_{L_{22}} & -Y_{L_{32}} \\ -Y_{L_{13}} & -Y_{L_{23}} & Y_{L_{33}} \end{bmatrix} \quad \ldots(2)$$

The total admittance $Y$ is as expressed in the equation (3)

$$Y = Y_c + Y_L \quad \ldots(3)$$

Since the characteristics of $Y_L$ and $Y_c$ are different from each other, it becomes possible to reduce the mutual admittance, as shown in the equation (4) by suitably choosing the value of $Y_L$. In other words, it is possible to reduce to zero the coupling between the lines. As a consequence, it is possible to extinguish a secondary arc.

$$Y = \begin{bmatrix} Y_{11} & 0 & 0 \\ 0 & Y_{22} & 0 \\ 0 & 0 & Y_{33} \end{bmatrix} \quad \ldots(4)$$

It is impossible to reduce the electrostatic induction from whole to zero where each phase of the transmission line consists of two juxtaposed conductors. Equations (5) and (6) indicate that it is very difficult, if not impossible, to extinguish a secondary arc by this means.

$$Y_c = \begin{bmatrix} Y_{c_{11}} & -Y_{c_{21}} & \cdots & \cdots & \cdots & -Y_{c_{61}} \\ -Y_{c_{12}} & Y_{c_{22}} & \cdots & \cdots & \cdots & -Y_{c_{62}} \\ -Y_{c_{13}} & \cdots & Y_{c_{33}} & \cdots & \cdots & -Y_{c_{63}} \\ -Y_{c_{14}} & \cdots & \cdots & Y_{c_{44}} & \cdots & -Y_{c_{64}} \\ -Y_{c_{15}} & \cdots & \cdots & \cdots & Y_{c_{55}} & -Y_{c_{65}} \\ -Y_{c_{16}} & \cdots & \cdots & \cdots & \cdots & Y_{c_{66}} \end{bmatrix} \quad \ldots (5)$$

$$Y_L = \begin{bmatrix} Y_{L_{11}} & -Y_{L_{21}} & -Y_{L_{31}} & O & O & O \\ -Y_{L_{12}} & Y_{L_{22}} & -Y_{L_{32}} & O & O & O \\ -Y_{L_{13}} & -Y_{L_{23}} & Y_{L_{33}} & O & O & O \\ O & O & O & Y_{L_{44}} & -Y_{L_{54}} & -Y_{L_{64}} \\ O & O & O & -Y_{L_{45}} & Y_{L_{55}} & -Y_{L_{65}} \\ O & O & O & -Y_{L_{46}} & -Y_{L_{56}} & Y_{L_{66}} \end{bmatrix} \quad \ldots (6)$$

In order to overcome this drawback, an extinguishing reactor of the form set out in Figure 3 has been developed. The admittance matrix of the extinguishing reactor, which is shown in Figure 3, is expressed by equation (7). If $Y_L$ is chosen in the equation (7) in such a way that the admittance of the transmission line in the equation (5) is cancelled, it becomes possible to reduce to zero the electrostatic induction from the adjacent line, thereby making it possible to extinguish a secondary arc.

$$Y_L = \begin{bmatrix} Y_{L_{11}} & \cdots & \cdots & \cdots & \cdots & -Y_{L_{61}} \\ -Y_{L_{12}} & Y_{L_{22}} & \cdots & \cdots & \cdots & -Y_{L_{62}} \\ -Y_{L_{13}} & \cdots & Y_{L_{33}} & \cdots & \cdots & -Y_{L_{63}} \\ -Y_{L_{14}} & \cdots & \cdots & Y_{L_{44}} & \cdots & -Y_{L_{64}} \\ -Y_{L_{15}} & \cdots & \cdots & \cdots & Y_{L_{55}} & -Y_{L_{65}} \\ -Y_{L_{16}} & \cdots & \cdots & \cdots & \cdots & Y_{L_{66}} \end{bmatrix} \quad \ldots (7)$$

On the other hand, there has conventionally been considered a system in accordance with which the value of $Y_L$ in the above-mentioned reactor system is set at a constant or at a certain calculated value by identifying the troubled phase. However, the value of $Y_L$ does not necessarily take the most suitable value and it becomes difficult to extinguish the secondary arc within a short time because it is impossible to avoid the fact that the admittance of the transmission line varies due to the fault on the phase and, in addition, considerable errors are found in any calculation of the line constant which becomes the reference in setting the most suitable value $Y_L$.

In United States Patent Specification No. 2824978, a transmission line system with secondary arc extinction apparatus of the type described above is disclosed and it is stated in the specification, although no details are given, that the reactors can be provided with special control windings influencing their main field in such a way that the density of field lines is changed dependent on the state of the line. In this way, the active inductance of the reactors can be changed so that compensation of the line-capacitance mainly takes place at the mentioned service conditions while the reactive power consumed by the reactor becomes substantially less on a heavily loaded line.

U.S. Patent Specification No. 2050082 discloses a circuit for suppressing the ground current in the case of an earth fault on a three phase electric system. The suppressing means are a variable reactance in the form of a transformer and another inductive reactor. The primary winding of the transformer is connected between neutral and ground. The inductive reactor is included in the second circuit of the transformer and rectifying means are also provided. The variable reactance provided by the transformer compensates at some point the capacitance value of the system so that the current to ground is compensated.

3

Furthermore, the reference "Soviet Inventions Illustrated" Week C 30, 3rd September, 1980 gives an Abstract of Soviet Patent Application No. SU—A—702447. In this disclosure, a similar secondary arc extinction apparatus as that described above includes a transformer having its secondary winding connected to reactors in series with semiconductor switching elements which include thyristors connected in anti-parallel relation to each other. The thyristors are controlled by a control circuit.

It is most important that the secondary arc is extinguished as rapidly as possible and, to this end, the present invention discloses secondary arc extinction apparatus which is characterised in that the variable reactance means comprises a transformer having a primary winding and a secondary winding which is connected in series with a reactor and a thyristor switching element, the primary winding of the transformer being connected electrically in series with first reactance means; and control means comprises first generating means arranged to generate a first signal representing a predetermined firing angle of the thyristor switching element in response to a signal from detecting means indicating the presence of a secondary arc; second generating means for generating second signals representing different firing angles; means for modifying the first signal by the addition or subtraction of the second signals; and a firing pulse generator arranged to receive said modified first signal and produce appropriate firing signals for the thyristor switching element.

In order that the invention may be more readily understood, it will now be described, by way of example only, with reference to Figures 4 to 10 of the accompanying drawings, in which:—

Figure 1 shows a conventional power transmission line with a secondary arc to earth from one of the phases;

Figures 2 and 3 show conventional transmission lines provided with reactors to cancel the electrostatic induction between the lines;

Figure 4 is a diagram showing one embodiment of the invention;

Figure 5 is a diagram showing another embodiment of the invention;

Figure 6 is a block diagram of the control device shown in Figure 4;

Figure 7 is a time chart explaining the operation of the control device illustrated in Figure 6;

Figures 8 and 9 are time charts explaining the operation of the firing angle of the thyristor to be controlled by the control device shown in Figure 6; and

Figure 10 is a block diagram showing another form of the control device illustrated in Figure 6.

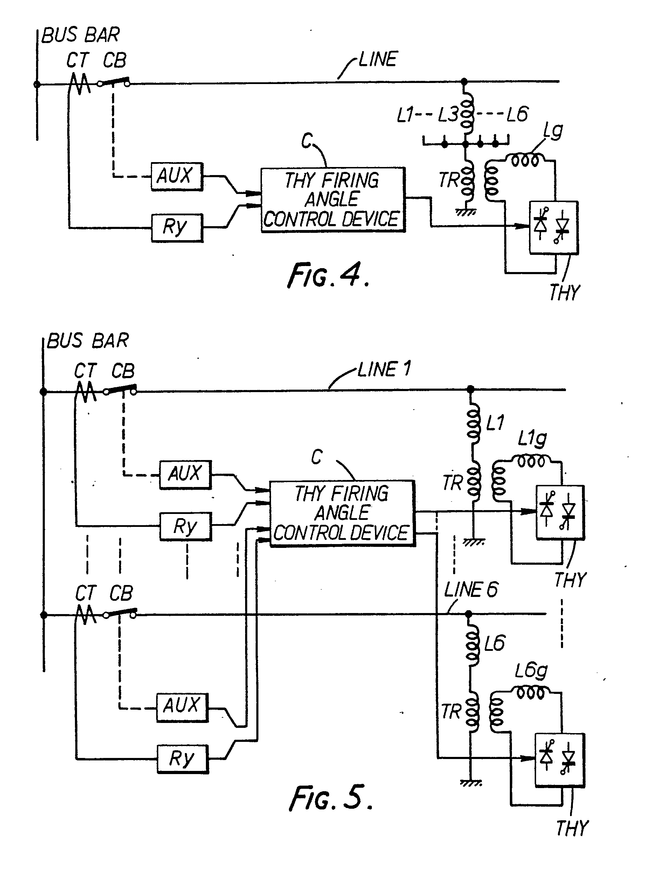

Referring to Figure 4, one phase line or conductor of a multiphase transmission system is shown connected at one end to a bus bar. A current transformer CT is provided on the line and a circuit breaker CB is provided at the end of the line adjacent the bus bar. The other end of the line is connected through a further circuit breaker to a further bus bar, neither of which are shown. A first reactor $L_3$ is connected at one end to the line and its other end is starred with corresponding ends of other reactors connected one to each line. In a normal three phase system, there will be three reactors $L_1$—$L_3$ but, in a three phase two conductor per phase system, there will be six reactors $L_1$—$L_6$. The star point of the reactors is connected through a primary winding of a transformer TR to earth. The secondary winding of the transformer is connected by way of a reactor $L_g$ to a thyristor switching element THY consisting of a pair of thyristors connected in anti-parallel relation. The thyristors are gated by a firing angle control device C which is connected to the thyristors to adjust the firing angle of the thyristors. The firing angle control device C receives a signal from the current transformer CT by way of a protective relay $R_y$ and also from an auxiliary contact AUX of the circuit breaker CB.

Figure 5 shows a six conductor three phase system in which each conductor has its own reactor transformer and thyristor control means.

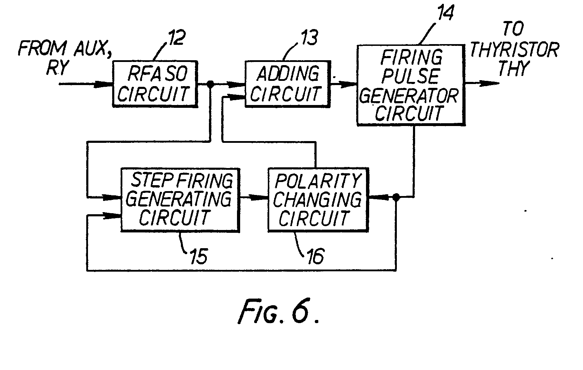

If a fault occurs on the line shown in Figure 4, protective relay $R_y$ responds to a signal from the current transformer CT and from a potential transformer (not shown) and generates a signal to trip the circuit breaker CB. When the circuit breaker is tripped, the auxiliary contact of the circuit breaker is closed and signals from the relay $R_y$ and from the auxiliary contact of the circuit breaker are supplied to the thyristor control device C which chooses an optimum reactance of the reactor in such a way that the capacitance between the lines and the reactor between the line resonate in parallel. Thus, the thyristor firing angle control device C generates a signal for controlling thyristor element THY so as to cause the capacitance and reactance to resonate in parallel, as described above. In the control device C, shown in Figure 6, a reference firing angle selection output circuit 12 (hereinafter referred to as RFASO circuit), which is supplied with signals from the auxiliary contact AUX of the circuit breaker and from relay $R_y$, generates a signal corresponding to the most suitable firing angle $\alpha 0$.

The operation of the RFASO circuit 12 will now be described. In general, there are various faults, for example, earth faults and interphase faults. According to the kind of fault and the line on which the fault occurs, the reactance value has to change so as to resonate in parallel in each case. The reactance value is set by RFASO circuit so as to generate a signal depending upon the type of fault.

In Figure 5, when a fault occurs on line 1, thyristor THY for line one is not controlled, but thyristor THY for lines two, three ... six are controlled, so that the reactance value for each line is changed in accordance with the type of fault.

The output signal from RFASO circuit 12 is supplied to an adding circuit 13 and to a step firing angle generating circuit 15. The output of adding circuit 13 is supplied to thyristor THY through a firing pulse generating circuit 14. Step firing angle generating circuit 15 generates a step signal $\Delta\alpha$, $2\Delta\alpha$, $3\Delta\alpha$, ... $n\Delta\alpha$, but the output of step circuit 15 is reset when a limit circuit of the pulse generating circuit 14 is operated.

A polarity changing circuit 16 comprising an inverting circuit enables the output from the generating circuit 15 to pass to the adding circuit 13.

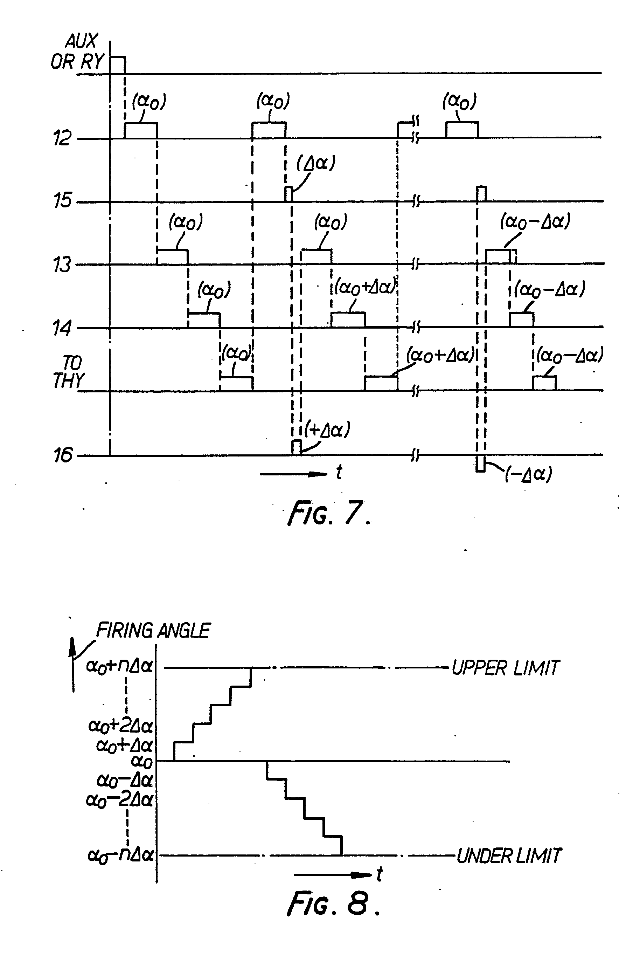

When the limit circuit of generating circuit 14 is operated, the output $\Delta\alpha$ from the circuit 15 is inverted to have negative polarity, as shown in Figure 7.

Now, if a fault is caused on the line, the auxiliary contact of the circuit protective relay $R_y$, develops a signal indicative of the fault and the manner which has caused the fault, and this signal is sent to the firing angle selection output circuit 12. The most suitable firing angle $\alpha0$ is chosen from a previous calculation indicative of the manner in which the fault is caused. Then, this output $\alpha0$ is transmitted to pulse generator circuit 14.

Adding circuit 13 and the step firing angle generating circuit 15 commence to operate in response to a signal from RFASO. In addition, adding circuit 13 is synchronised with step firing generating circuit 15 so as to add only the basic firing angle $\alpha0$ as an initial input of the adding circuit 13. On receipt of the signal from RFASO, the step firing generating circuit 15 generates outputs $\Delta\alpha$, $2\Delta\alpha$, ... $n\Delta\alpha$ to be transmitted to the adding circuit 13 via the polarity changing circuit 16. As a result, the output of the adding circuit gradually increases by steps $\Delta\alpha$ from $\alpha0$, $\alpha0+\Delta\alpha$, $\alpha0+2\Delta\alpha$, ... $\alpha0+n\Delta\alpha$. Thyristor THY is fired by pulses generated in circuit 14 in accordance with the output of the adding circuit 13 and, when the firing pulse generating circuit 14 reaches a predetermined limit, i.e an upper limit, the generating circuit 15 is reset from $n\Delta\alpha$ to $\Delta\alpha$ and the polarity of the output of the step firing generating circuit is inverted to negative polarity by changing circuit 16 in accordance with the output of the firing pulse generating circuit 14. Thus, thyristor THY is controlled in accordance with output $\alpha0-\Delta\alpha$, $\alpha0-2\Delta\alpha$, ... $\alpha0-n\Delta\alpha$ of the adding circuit 13 then, when the output of the adding circuit 13 reaches a predetermined value, i.e. its lower limit, the signal to the thyristor THY is stopped and the operation is completed.

Since the angle varies either continuously or in steps about a reference value $\alpha0$, as shown in Figures 7 and 8, by employing the means described above, it is possible to vary the reactance of a neutral point, thereby making it possible that the most suitable reactor admittance is obtained, such that the extinguishing reactor admittance cancels the line admittance within a short period of time. Thus, it becomes possible to extinguish the secondary arc.

It is possible for the ignition angle $\alpha$ to be varied to the maximum ignition value which is determined in advance in a continuous manner or with steps $\Delta\alpha$ about the reference firing angle $\alpha0$ as the initial value and, after that, it is varied in the same way to the minimum firing angle. In addition, it is also possible, in accordance with an alternative arrangement, that the firing angle is first of all varied from an initial value to the minimum firing angle and, after that, it is varied to the maximum firing angle.

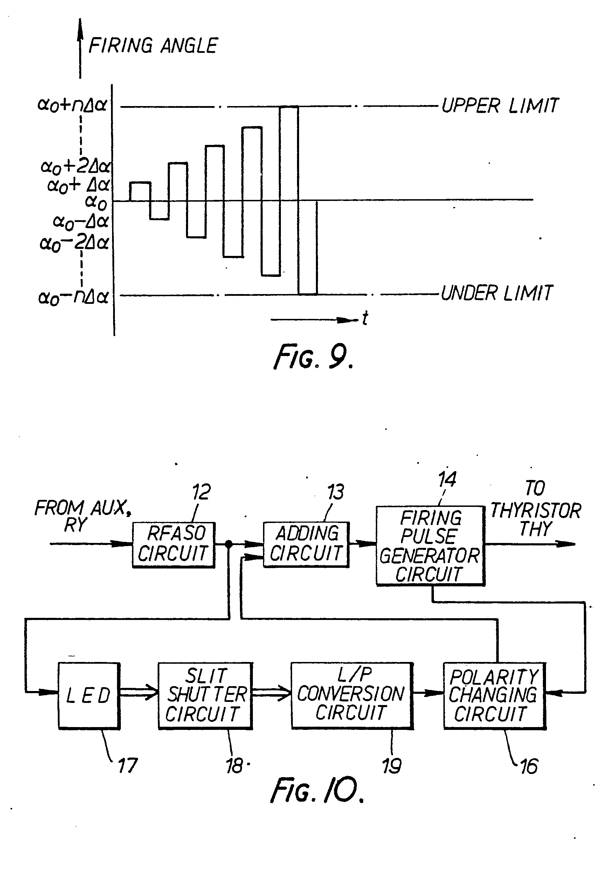

Referring now to Figure 9, polarity changing circuit 16 functions to switch cyclically the polarity of the output, i.e. $\Delta\alpha$, $2\Delta\alpha$, ... $n\Delta\alpha$ from the step firing generating circuit 15, as shown in Figure 8.

Still another embodiment for generating a gate pulse will be explained with reference to Figure 10, wherein a series circuit of a light emitting diode $LED_{17}$, a slit shutter circuit 18 and a light/pulse conversion circuit 19 is provided as a replacement of the step firing generating circuit 15 shown in Figure 6.

In brief, light emitting diode $LED_{17}$ connected to the RFASO circuit 12 emits light in accordance with the signal of the circuit 12. The slit shutter circuit 18, which includes a conventional rotating disc having a plurality of holes disposed at the circumference thereof, chops light from the $LED_{17}$. The light/pulse conversion circuit 19 receives the chopped light and generates signals $\Delta\alpha$, $2\Delta\alpha$, ... $n\Delta\alpha$ as well as the output of the step firing generating circuit 15 shown in Figure 6. Thus, the adding circuit 13 shown in Figure 10 fundamentally generates a signal shown in Figures 8 or 9.

It is also acceptable that the initial firing angle $\alpha0$ and the next firing angle $\alpha1$ are synchronised to each other and, furthermore, the step firing angle $n\Delta\alpha$, which is n times $\Delta\alpha$, is developed as an output so as to vary the firing angle using the fact that the number of passage at zero point of the earth reactor current is equivalent to the number for the thyristor to be ignited in Figures 4 and 5, and the synchronisation of the firing angle is effected to the zero point base of the electric current. The above-mentioned n is a numeral such as the number of passage at the zero point of the electric current or a multiple thereof.

By way of the present invention, it is possible to obtain the most suitable reactor admittance which rapidly cancels the secondary arc and makes it possible that the period of time between the opening and the closing of the circuit breakers is considerably reduced.

### Claims

1. Secondary arc extinction apparatus for use with an electric power system including a multiphase transmission line and means for disconnecting each phase conductor (LINE) from the power system, said apparatus comprising for each phase conductor (LINE) a first reactance means ($L_1$—$L_6$) and a second reactance means connected electrically in series between the respective phase conductor (LINE) and earth; means (AUX, $R_y$) for detecting the presence of a secondary arc between one phase conductor (LINE) of the line and earth; and control means for controlling the reactance of the second reactance means to thereby extinguish said secondary arc; characterised in that

the second reactance means comprises a transformer (TR) having a primary winding and a secondary winding which is connected in series with a reactor ($L_g$) and a thyristor switching element (THY), the primary winding of the transformer (TR) being connected electrically in series with the first reactance means ($L_1$—$L_6$) and said control means comprises first generating means (12) arranged to generate a first signal representing a predetermined firing angle ($\alpha 0$) of the thyristor switching element (THY) in response to a signal from said detecting means (AUX, $R_y$) indicating the presence of a secondary arc, second generating means (15) for generating second signals representing different firing angles;

means (16, 13) for modifying the first signal by the addition or subtraction of the second signals; and

a firing pulse generator (14) arranged to receive said modified first signal and produce appropriate firing signals for the thyristor switching element (THY).

2. Secondary arc extinction apparatus as claimed in claim 1, characterised in that said second generating means (15) generates signals which progressively increase in stepwise manner, and the firing pulse generator (14) includes upper and lower limit circuits which, when an upper or a lower limit is reached by the modified first signal, resets the second generating means (15) to the minimum value of the second signals.

3. Secondary arc extinction apparatus as claimed in claim 1, characterised in that said second generating means (15) generates signals which progressively increase in stepwise manner, and the control means includes upper and lower limit circuits, and the modifying means alternately add the second signals to the first signal and subtract the second signals from the first signal within predetermined upper and lower limits.

4. Secondary arc extinction apparatus as claimed in claim 1, wherein said second generating means include light emitting means (17) connected to the first generating means (12) slit shutter means (18) for chopping light emitted by said light emitting means (17) and light-pulse converting means (19) for converting said chopped light to electric pulses (Figure 10).

## Patentansprüche

1. Sekundärlichtbogenlöscheinrichtung zur Verwendung bei einem elektrischen Stromversorgungssystem, mit einer mehrphasigen Übertragungsleitung und mit Mitteln zur Trennung jeder Phasenleitung von dem Stromversorgungssystem, wobei die Einrichtung für jede Phasenleitung eine erste Blindwiderstandseinrichtung ($L_1$—$L_6$) und eine zweite Blindwiderstandseinrichtung aufweist, die elektrisch in Reihe zwischen die jeweilige Phasenleitung und Erde geschaltet sind, mit Mitteln (AUX, $R_y$) zur Feststellung der Anwesenheit eines Sekundärlichtbogens zwischen einer Phasenleitung und Erde, und mit einer Kontrolleinrichtung zur Feststellung des Blindwiderstandes der zweiten Blindwiderstandseinrichtung, um dadurch den Sekundärlichtbogen zu löschen, dadurch gekennzeichnet, daß

die zweite Blindwiderstandseinrichtung einen Transformator (TR) mit einer Primärwicklung und einer Sekundärwicklung aufweist, der in Reihe mit einem Blindwiderstand ($L_g$) und einem Thyristorschaltelement (THY) geschaltet ist, wobei die Primärwicklung des Transformators (TR) elektrisch in Reihe mit der ersten Blindwiderstandseinrichtung ($L_1$—$L_6$) geschaltet ist, und die Kontrolleinrichtung erste Generatormittel (12) aufweist, um ein erstes Signal zu erzeugen, das einen vorbestimmten Zündwinkel ($\alpha 0$) des Thyristorschaltelements (THY) in Abhängigkeit von einem die Anwesenheit eines Sekundärlichtbogens anzeigenden Signal von der Feststelleinrichtung (AUX, $R_y$) darstellt, und zweite Generatormittel (15) zur Erzeugung zweiter Signale, die unterschiedliche Zündwinkel darstellen;

Mittel (16, 13) zur Änderung des ersten Signals durch Addition oder Subtraktion des zweiten Signals vorgesehen sind; und daß

ein Zündimpulsgenerator (14) vorgesehen ist, der das abgewandelte erste Signal empfängt und passende Zündsignale für das Thyristorschaltelement (THY) erzeugt.

2. Einrichtung nach Anspruch 1, dadurch gekennzeichnet, daß die zweite Generatoreinrichtung (15) Signale erzeugt, die fortschreitend schrittweise ansteigen, und daß der Zündimpulsgenerator (14) obere und untere Grenzkreise aufweist, die dann, wenn das abgewandelte erste Signal eine obere oder untere Grenze erreicht, die zweite Generatoreinrichtung (15) auf den kleinsten Wert der zweiten Signale zurückstellt.

3. Einrichtung nach Anspruch 1, dadurch gekennzeichnet, daß die zweite Generatoreinrichtung (15) Signale erzeugt, die fortschreitend schrittweise ansteigen, und daß die Kontrolleinrichtung obere und untere Grenzkreise aufweist und daß die Abwandlungseinrichtung abwechselnd innerhalb vorbestimmter oberer und unterer Grenzen die zweiten Signale dem ersten Signal hinzufügen und die zweiten Signale von dem ersten Signal abziehen.

4. Einrichtung nach Anspruch 1, dadurch gekennzeichnet, daß die zweite Generatoreinrichtung aufweist lichtemittierende Mittel (17), die an die erste Generatoreinrichtung (12) angeschlossen ist, Schlitzblendenmittel (18) zum Zerhacken des von den lichtemittierenden Mitteln (17) ausgesandten Lichts und Lichtimpulswandlermittel (19) zur Umwandlung des zerhackten Lichts in elektrische Impulse (Fig. 10).

## Revendications

1. Appareil d'extinction d'arc secondaire pour utilisation avec un système d'alimentation électrique comprenant une ligne de transmission multiphase et des moyens pour déconnecter chaque conducteur de phase (LIGNE), du système d'alimentation, cet appareil comprenant, pour chaque conducteur de phase (LIGNE), un premier moyen de réactance ($L_1$—$L_6$) et un second moyen de réactance connectés électriquement en série entre le conducteur de phase respectif (LIGNE) et la terre;

des moyens (AUX, $R_y$) pour détecter la présence d'un arc secondaire entre un conducteur de phase (LIGNE) de la ligne et la terre; et

un moyen de commande pour commander la réactance du second moyen de réactance, de manière à éteindre ledit arc secondaire;

caractérisé en ce que le second moyen de réactance comprend un transformateur (TR) ayant un enroulement primaire et un enroulement secondaire qui est connecté en série avec un réacteur ($L_g$) et un élément de commutation à thyristor (THY), l'enroulement primaire du transformateur (TR) étant connecté électriquement, en série, avec le premier moyen de réactance ($L_1$—$L_6$), et ledit moyen de commande comprend un premier moyen générateur (12) agencé pour engendrer un premier signal, représentant un angle d'allumage prédéterminé (α0) de l'élément de commutation à thyristor (THY), en réponse à un signal desdits moyens de détection (AUX, $R_y$) indiquant la présence d'un arc secondaire, un second moyen générateur (15) pour engendrer des seconds signaux représentant différents angles d'allumage; des moyens (16, 13) pour modifier le premier signal par l'addition ou la soustraction des seconds signaux; et un générateur d'impulsion d'allumage (14) agencé pour recevoir ledit premier signal modifié et produire des signaux d'allumage appropriés pour l'élément de commutation à thyristor (THY).

2. Appareil d'extinction d'arc secondaire, comme revendiqué dans la revendication 1, caractérisé en ce que ledit second moyen générateur (15) engendre des signaux qui augmentent progressivement, par degrés, et le générateur d'impulsion d'allumage (14) comprend des circuits de limite supérieure et inférieure ce qui, lorsque une limite supérieure ou une limite inférieure est atteinte par le premier signal modifié, réajuste le second moyen générateur (15) à la valeur minimale des seconds signaux.

3. Appareil d'extinction d'arc secondaire, comme revendiqué dans la revendication 1, caractérisé en ce que ledit second moyen générateur (15) engendre des signaux qui augmentent progressivement, par degrés, et le moyen de commande comprend des circuits de limite supérieure et inférieure, et les moyens modificateurs ajoutent les seconds signaux au premier signal et soustraient les seconds signaux du premier signal, en alternance, à l'intérieur de limites supérieure et inférieure prédéterminées.

4. Appareil d'extinction d'arc secondaire, comme revendiqué dans la revendication 1, dans lequel le second moyen générateur inclut un moyen émetteur de lumière (17) connecté au premier moyen générateur (12), un moyen obturateur de fente (18) pour hâcher la lumière émise par ledit moyen émetteur de lumière (17) et un moyen convertisseur d'impulsion lumineuse (19) pour convertir ladite lumière hâchée en impulsions électriques (fig. 10).

FIG. 1.

FIG. 2.

FIG. 3.

FIG.4.

FIG.5.

FIG. 6.

FIG. 7.

FIG. 8.

FIRING ANGLE

$\alpha_0 + n\Delta\alpha$ ——————————————— UPPER LIMIT

$\alpha_0 + 2\Delta\alpha$

$\alpha_0 + \Delta\alpha$

$\alpha_0$

$\alpha_0 - \Delta\alpha$

$\alpha_0 - 2\Delta\alpha$

$\alpha_0 - n\Delta\alpha$ ——————————————— UNDER LIMIT

$t$

*FIG. 9.*

FROM AUX. RY

12 RFASO CIRCUIT

13 ADDING CIRCUIT

14 FIRING PULSE GENERATOR CIRCUIT

TO THYRISTOR THY

17 L E D

18 SLIT SHUTTER CIRCUIT

19 L/P CONVERSION CIRCUIT

16 POLARITY CHANGING CIRCUIT

*FIG. 10.*